# EUROPEAN PATENT APPLICATION

(11) **EP 4 518 108 A1**
(43) Date of publication of application: **05.03.2025**
(21) Application number: 23865080.8
(22) Date of filing: 21.07.2023
(51) Int. Cl.: H02K 5/22, H02K 5/10, H02K 11/33

(54) **MOTOR DRIVE DEVICE FOR VEHICLE**

(30) Priority: 16.09.2022 JP 2022148327
(71) Applicant: AISIN CORPORATION, Kariya-shi, Aichi 448-8650 (JP)
(72) Inventor: KOGA, Kiyotaka, Kariya-shi, Aichi 448-8650 (JP); MIYOSHI, Yoichi, Kariya-shi, Aichi 448-8650 (JP); AMANO, Satoru, Kariya-shi, Aichi 448-8650 (JP)
(74) Representative: Kramer Barske Schmidtchen Patentanwälte PartG mbB
(86) International application number: PCT/JP2023/026764
(87) International publication number: WO 2024/057720

(57) **Abstract**

This vehicle motor drive device 100 includes: a motor 1; an inverter 2 configured to supply electric power to the motor 1; a motor-side wire 3 that connects the motor 1 and the inverter 2; a housing 5 including a motor chamber 51 and having a through hole 54 through which the motor-side wire 3 extending from the motor 1 housed in the motor chamber 51 passes; and an elastically deformable tubular elastic member 6 having a wire insertion hole 63 in which the motor-side wire 3 extending from the motor 1 is inserted, the tubular elastic member 6 being mounted in the through hole 54 so as to seal between the through hole 63 and the motor-side wire 3.

## Description

### TECHNICAL FIELD

The present invention relates to vehicle motor drive devices, and more particularly to a vehicle motor drive device including a motor.

### BACKGROUND ART

A vehicle motor drive device including a motor is conventionally known in the art. This vehicle motor drive device is disclosed in, for example, Japanese Unexamined Patent Application Publication No. 2021-136770 (JP 2021-136770 A).

JP 2021-136770 A discloses a motor device (vehicle motor drive device) including a motor. This motor device includes an inverter, an insulated terminal block, and a motor housing. The inverter is configured to convert direct current (DC) power to alternating current (AC) power to supply the AC power to the motor. The insulated terminal block electrically connects a current-carrying cable connected to the inverter and a motor busbar connected to the motor in order to supply the AC power from the inverter to the motor. The motor housing includes a motor chamber that houses the motor and that stores oil to be used to cool the motor. The motor housing includes a terminal block chamber that houses the insulated terminal block and a partition wall that separates the terminal block chamber and the motor chamber, in order to ensure oil-tightness and insulation of the motor chamber.

### Related Art Documents

### Patent Documents

Patent Document 1: Japanese Unexamined Patent Application Publication No. 2021-136770 (JP 2021-136770 A)

### SUMMARY OF THE INVENTION

### Problem to be Solved by the Invention

In the motor device of JP 2021-136770 A, however, in order to ensure the oil-tightness and insulation of the motor chamber, the motor and the inverter are electrically connected using the insulated terminal block housed in the terminal block chamber separated by the partition wall. The motor device of JP 2021-136770 A is therefore disadvantageous in that the motor device (device) has a complicated structure because it includes the terminal block chamber and the insulated terminal block.

The present invention was made to address the foregoing issue, and one object of the present invention is to provide a vehicle motor drive device that can simplify the device structure while ensuring oil-tightness and insulation of a motor chamber.

### Means for Solving the Problem

In order to achieve the above object, a vehicle motor drive device according to one aspect of the present invention includes: a motor configured to be used in a vehicle; an inverter configured to supply electric power to the motor; a motor-side wire one end of which is connected to the motor and that connects the motor and the inverter; a housing including a motor chamber that houses the motor inside and that stores a coolant for cooling the motor housed in the motor chamber, the housing having a through hole through which the motor-side wire extending from the motor housed in the motor chamber passes; and an elastically deformable tubular elastic member having a wire insertion hole in which the motor-side wire extending from the motor is inserted, the tubular elastic member being mounted in the through hole so as to seal between the through hole and the motor-side wire.

In the vehicle motor drive device according to the aspect of the present invention, as described above, the elastically deformable tubular elastic member is provided that includes the wire insertion hole in which the motor-side wire extending from the motor housed in the motor chamber is inserted, and that is mounted in the through hole so as to seal between the through hole and the motor-side wire. Oil-tightness and insulation of the motor chamber can thus be ensured by the tubular elastic member mounted in the through hole of the housing without providing a terminal block chamber and an insulated terminal block in the housing. This can simplify the device structure while ensuring the oil-tightness and insulation of the motor chamber.

In the vehicle motor drive device according to the above aspect, the housing preferably further includes an inverter chamber that houses the inverter inside, and a partition wall that separates the motor chamber and the inverter chamber and that has the through hole, and the tubular elastic member is preferably mounted in the through hole of the partition wall.

With this configuration, the oil-tightness and insulation of the motor chamber can be ensured by mounting the tubular elastic member in the through hole formed in the partition wall without providing a terminal block chamber and an insulated terminal block in the housing separately from the inverter chamber and the motor chamber. This can simplify the device structure in the vehicle motor drive device that is a combined unit of the motor and the inverter.

In this case, the vehicle motor drive device according to the above aspect preferably further includes an inverter-side wire one end of which is connected to the inverter and that is disposed in the inverter chamber, and the other end of the motor-side wire and the other end of the inverter-side wire are preferably connected in the inverter chamber.

With this configuration, the other end of the motor-side wire and the other end of the inverter-side wire are connected in the inverter chamber in which the coolant is not stored. Therefore, the coolant will not get on the connection portion between the other end of the motor-side wire and the other end of the inverter-side wire. This can reduce a decrease in electrical conductive properties due to adhesion of the coolant.

In the vehicle motor drive device according to the above aspect, the tubular elastic member preferably includes a circumferential inner protrusion protruding from an inner peripheral surface of the wire insertion hole having a diameter smaller than a diameter of the motor-side wire.

With this configuration, the inner protrusion contacts the motor-side wire. This can reduce contact between the entire inner peripheral surface of the wire insertion hole and the entire outer peripheral surface of the motor-side wire, and therefore can reduce sliding resistance between the inner peripheral surface of the wire insertion hole and the motor-side wire when inserting the motor-side wire into the wire insertion hole. This facilitates insertion of the motor-side wire into the wire insertion hole while ensuring sealing performance between the wire insertion hole and the motor-side wire.

In the vehicle motor drive device according to the above aspect, the tubular elastic member preferably includes a circumferential outer protrusion protruding from a portion of an outer peripheral surface that faces an inner peripheral surface of the through hole of the housing.

With this configuration, the outer protrusion can thus be elastically deformed between the outer peripheral surface of the tubular elastic member and the inner peripheral surface of the through hole of the housing. This can improve sealing performance between the inner peripheral surface of the through hole of the housing and the outer peripheral surface of the tubular elastic member.

In the vehicle motor drive device according to the above aspect, a plurality of the motor-side wires is preferably provided to connect the motor and the inverter, a plurality of the tubular elastic members is preferably provided corresponding to the plurality of the motor-side wires, and the housing preferably has a plurality of the through holes corresponding to the plurality of the tubular elastic members in which the plurality of the motor-side wires is individually inserted.

In the case of a single tubular elastic member having a plurality of wire insertion holes corresponding to the plurality of the motor-side wires, if the plurality of the motor-side wires moves due to vibration of the vehicle and the elastic member near the wire insertion hole in which one of adjacent motor-side wires is inserted is pulled with the movement of the one motor-side wire, a gap may be created between the wire insertion hole in which the other wire is inserted and the other wire. This is disadvantageous in that the coolant leaks out of the motor chamber through the gap between the wire insertion hole in which the other wire is inserted and the other wire (sealing performance is reduced). Therefore, by forming, in the housing, the plurality of the through holes corresponding to the plurality of the tubular elastic members in which the plurality of the motor-side wires is individually inserted, the gap is less likely to be created between the motor-side wire and the wire insertion hole due to vibration of the vehicle. This can reduce a decrease in sealing performance between the wire insertion hole and the motor-side wire.

The vehicle motor drive device according to the above aspect may include the following configurations.

### (Additional Remark 1)

In the vehicle motor drive device according to the above aspect, the tubular elastic member includes a circumferential end-side protrusion that protrudes from an opposite end from the motor chamber side and that engages with an opposite edge of the through hole from the motor chamber side.

This configuration allows the tubular elastic member to be retained in the through hole.

### (Additional Remark 2)

In the vehicle motor drive device according to the above aspect, the tubular elastic member has heat resistance and oil resistance.

This configuration can reduce deterioration of the tubular elastic member even when the vehicle motor drive device is installed in a portion of the vehicle that tends to become relatively hot.

### BRIEF DESCRIPTION OF THE DRAWINGS

[FIG. 1] FIG. 1 is a schematic diagram of a vehicle motor drive device according to an embodiment.
[FIG. 2] FIG. 2 is a sectional view of a tubular elastic member of the vehicle motor drive device according to the embodiment.
[FIG. 3] FIG. 3 is a plan view of the tubular elastic member of the vehicle motor drive device according to the embodiment, as viewed from the motor chamber side.
[FIG. 4] FIG. 4 is a sectional view of a tubular elastic member of a vehicle motor drive device according to a first modification of the embodiment.
[FIG. 5] FIG. 5 is a sectional view of a tubular elastic member of a vehicle motor drive device according to a second modification of the embodiment.

### MODES FOR CARRYING OUT THE INVENTION

Hereinafter, an embodiment of the present invention will be described with reference to the drawings.

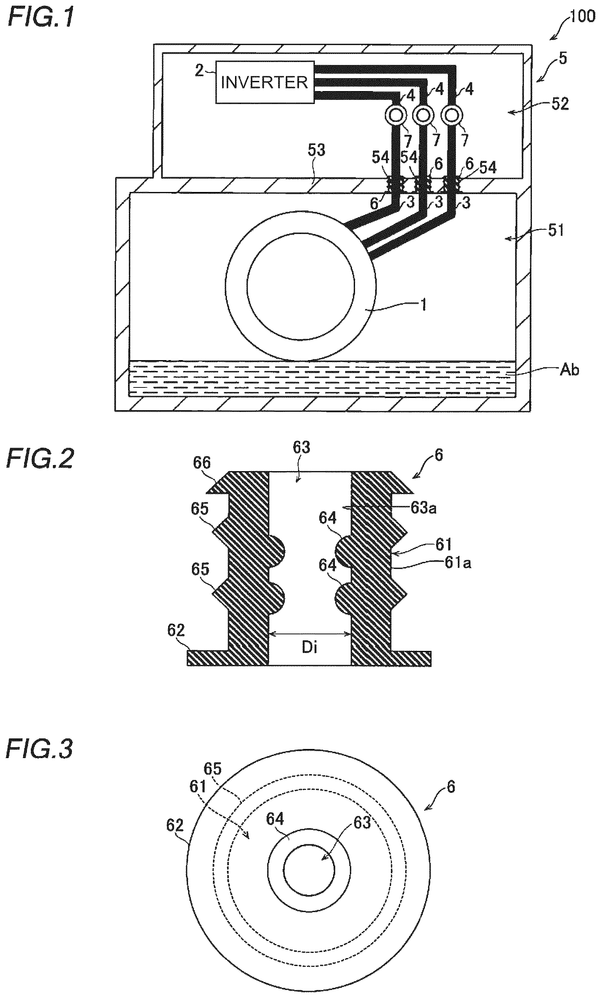

The configuration of a vehicle motor drive device 100 according to an embodiment will be described with reference to FIGS. 1 to 3.

As shown in FIG. 1, a vehicle motor drive device 100 is a drive motor unit that is mounted on a vehicle such as a battery electric vehicle. The vehicle motor drive device 100 includes a motor 1, an inverter 2, a motor-side wire 3, an inverter-side wire 4, a housing 5, and a tubular elastic member 6.

The motor 1 is a three-phase AC motor for use in a vehicle. The motor 1 is configured to generate a driving force for moving a drive wheel. The inverter 2 is configured to supply electric power to the motor 1. That is, the inverter 2 is configured to convert DC power supplied from a lithium-ion battery, not shown, to AC power. AC power of U-phase, V-phase, and W-phase is thus supplied to the motor 1.

The motor-side wire 3 is an insulated wire that is a metal wire (such as a copper wire) covered with an insulator and that connects the motor 1 and the inverter 2. One end of the motor-side wire 3 is connected to the motor 1. The other end of the motor-side wire 3 is connected to the inverter-side wire 4 via a connection terminal 7. In order to supply the three-phase AC power of U-phase, V-phase, and W-phase to the motor 1, a plurality (three) of the motor-side wires 3 is provided for the three-phase AC power of U-phase, V-phase, and W-phase.

The inverter-side wire 4 is an insulated wire that is a metal wire (such as a copper wire) covered with an insulator and that connects the motor 1 and the inverter 2. One end of the inverter-side wire 4 is connected to the inverter 2. The other end of the inverter-side wire 4 is connected to the motor-side wire 3 via the connection terminal 7. In order to supply the three-phase AC power of U-phase, V-phase, and W-phase to the motor 1, a plurality (three) of the inverter-side wires 4 is provided for the three-phase AC power of U-phase, V-phase, and W-phase.

The other end of the motor-side wire 3 and the other end of the inverter-side wire 4 are connected in an inverter chamber 52 described later, not in a motor chamber 51 described later. That is, the other end of the motor-side wire 3 and the other end of the inverter-side wire 4 are connected via the connection terminal 7 in the inverter chamber 52 that does not store oil Ab (example of the "coolant" in the claims). The connection terminal 7 is composed of, for example, a round terminal attached to the other end of the motor-side wire 3, a round terminal attached to the other end of the inverter-side wire 4, and a bolt and nut that connect the round terminal for the motor-side wire 3 and the round terminal for the inverter-side wire 4.

The housing 5 is a metal casing that houses the motor 1, the inverter 2, etc. The housing 5 includes the motor chamber 51, the inverter chamber 52, a partition wall 53, and a through hole 54.

The motor chamber 51 is a space provided inside the housing 5. The motor 1 is housed inside the motor chamber 51. The oil Ab for cooling a heat-generating portion of the motor 1 housed in the motor chamber 51 is stored inside the motor chamber 51. The inverter chamber 52 is a space provided inside the housing 5. The inverter chamber 52 is adjacent to the upper side of the motor chamber 51. The inverter 2 is housed inside the inverter chamber 52. The oil Ab is not stored inside the inverter chamber 52. The partition wall 53 is a wall that separates the motor chamber 51 and the inverter chamber 52. The partition wall 53 extends in a horizontal direction.

The through hole 54 is formed so as to extend through the partition wall 53 in an up-down direction. The motor-side wire 3 extending from the motor 1 housed in the motor chamber 51 passes through the through hole 54. The partition wall 53 (housing 5) has a plurality (three) of the through holes 54 corresponding to a plurality of the tubular elastic members 6 in which the plurality of motor-side wires 3 is individually inserted.

### (Tubular Elastic Member)

As shown in FIG. 1, in the vehicle motor drive device 100 of the present embodiment, the tubular elastic member 6 is fitted in the through hole 54 in order to ensure oil-tightness and insulation of the motor chamber 51 while allowing AC power to be supplied from the inverter 2 to the motor 1.

As shown in FIGS. 2 and 3, the tubular elastic member 6 is an elastically deformable member mounted in the through hole 54 formed in the partition wall 53 so as to seal between the through hole 54 and the motor-side wire 3. The tubular elastic member 6 is a grommet. The tubular elastic member 6 has heat resistance since it is used in a portion that becomes relatively hot. The tubular elastic member 6 has oil resistance to ensure oil-tightness against the oil Ab in the motor chamber 51. The tubular elastic member 6 is made of a rubber material such as acrylic rubber, fluororubber, nitrile rubber, or urethane rubber.

The tubular elastic member 6 includes a body portion 61, a flange portion 62, a wire insertion hole 63, an inner protrusion 64, an outer protrusion 65, and an end-side protrusion 66.

The body portion 61 is a tubular portion that extends in a direction in which the motor chamber 51 and the inverter chamber 52 are arranged. The wire insertion hole 63 is formed in the body portion 61. The flange portion 62 is provided at an end on the motor chamber 51 side in the direction in which the motor chamber 51 and the inverter chamber 52 are arranged. The flange portion 62 is a circumferential portion protruding from an end on the motor chamber 51 side of the body portion 61 in a direction perpendicular to the direction in which the motor chamber 51 and the inverter chamber 52 are arranged. The wire insertion hole 63 is a hole in which the motor-side wire 3 extending from the motor 1 is inserted. The wire insertion hole 63 extends through the body portion 61 in the direction in which the motor chamber 51 and the inverter chamber 52 are arranged. The wire insertion hole 63 has a diameter Di smaller than the diameter of the motor-side wire 3 in the direction perpendicular to the direction in which the motor chamber 51 and the inverter chamber 52 are arranged. The wire insertion hole 63 is located in the center of the body portion 61 when viewed from the motor chamber 51 side.

The inner protrusion 64 is provided on an inner peripheral surface 63a of the wire insertion hole 63 in order to reduce the contact area between the inner peripheral surface 63a of the wire insertion hole 63 and the motor-side wire 3. The inner protrusion 64 is a circumferential portion protruding from the inner peripheral surface 63a of the wire insertion hole 63 in the direction perpendicular to the direction in which the motor chamber 51 and the inverter chamber 52 are arranged. A plurality (two) of the inner protrusions 64 is located next to each other in the direction in which the motor chamber 51 and the inverter chamber 52 are arranged. The number of inner protrusions 64 may be one or may be three or more.

The outer protrusion 65 is provided on an outer peripheral surface 61a of the body portion 61 so as to be elastically deformed between the outer peripheral surface 61a and an inner peripheral surface of the through hole 54 of the housing 5. The outer protrusion 65 is a circumferential portion protruding from the outer peripheral surface 61a of the body portion 61 in the direction perpendicular to the direction in which the motor chamber 51 and the inverter chamber 52 are arranged. The outer protrusion 65 is provided on a portion of the outer peripheral surface 61a of the body portion 61 that faces the inner peripheral surface of the through hole 54 of the housing 5. A plurality (two) of the outer protrusions 65 is located next to each other in the direction in which the motor chamber 51 and the inverter chamber 52 are arranged. The number of outer protrusions 65 may be one or may be three or more.

The end-side protrusion 66 is provided at an end on the inverter chamber 52 side in order to prevent falling out of the through hole 54. The end-side protrusion 66 is a circumferential portion protruding from an end on the inverter chamber 52 side (opposite side from the motor chamber 51 side) of the body portion 61 in the direction perpendicular to the direction in which the motor chamber 51 and the inverter chamber 52 are arranged. The end-side protrusion 66 engages with an edge on the inverter chamber 52 side (opposite side from the motor chamber 51 side) of the through hole 54.

A plurality (three) of such tubular elastic members 6 is provided corresponding to the plurality of (three) motor-side wires 3.

### (Effects of Embodiment)

The present embodiment has the following effects.

In the present embodiment, as described above, the vehicle motor drive device 100 includes the elastically deformable tubular elastic member 6. The tubular elastic member 6 includes the wire insertion hole 63 in which the motor-side wire 3 extending from the motor 1 housed in the motor chamber 51 is inserted, and is mounted in the through hole 54 so as to seal between the through hole 54 and the motor-side wire 3. Oil-tightness and insulation of the motor chamber 51 can thus be ensured by the tubular elastic member 6 mounted in the through hole 54 of the housing 5 without providing a terminal block chamber and an insulated terminal block in the housing 5. This can simplify the device structure while ensuring the oil-tightness and insulation of the motor chamber 51.

In the present embodiment, as described above, the housing 5 includes: the inverter chamber 52 that houses the inverter 2 inside; and the partition wall 53 that separates the motor chamber 51 and the inverter chamber 52 and that has the through hole 54. The tubular elastic member 6 is mounted in the through hole 54 formed in the partition wall 53. Oil-tightness and insulation of the motor chamber 51 can therefore be ensured by mounting the tubular elastic member 6 in the through hole 54 formed in the partition wall 53 without providing a terminal block chamber and an insulated terminal block in the housing 5 separately from the inverter chamber 52 and the motor chamber 51. This can simplify the device structure in the vehicle motor drive device 100 that is a combined unit of the motor 1 and the inverter 2.

In the present embodiment, as described above, the vehicle motor drive device 100 includes the inverter-side wire 4 one end of which is connected to the inverter 2 and that is disposed in the inverter chamber 52. The other end of the motor-side wire 3 and the other end of the inverter-side wire 4 are connected in the inverter chamber 52. Since the other end of the motor-side wire 3 and the other end of the inverter-side wire 4 are connected in the inverter chamber 52 in which the oil Ab is not stored, the oil Ab will not get on the connection portion between the other end of the motor-side wire 3 and the other end of the inverter-side wire 4. This can reduce a decrease in electrical conductive properties due to adhesion of the oil Ab.

In the present embodiment, as described above, the tubular elastic member 6 includes the circumferential inner protrusion 64 protruding from the inner peripheral surface 63a of the wire insertion hole 63 having the diameter Di smaller than the diameter of the motor-side wire 3. The inner protrusion 64 thus contacts the motor-side wire 3. This can reduce contact between the entire inner peripheral surface 63a of the wire insertion hole 63 and the entire outer peripheral surface of the motor-side wire 3, and therefore can reduce sliding resistance between the inner peripheral surface 63a of the wire insertion hole 63 and the motor-side wire 3 when inserting the motor-side wire 3 into the wire insertion hole 63. This facilitates insertion of the motor-side wire 3 into the wire insertion hole 63 while ensuring sealing performance between the wire insertion hole 63 and the motor-side wire 3.

In the present embodiment, as described above, the tubular elastic member 6 includes the circumferential outer protrusion 65 protruding from a portion of the outer peripheral surface 61a that faces the inner peripheral surface of the through hole 54 of the housing 5. The outer protrusion 65 can thus be elastically deformed between the outer peripheral surface 61a of the tubular elastic member 6 and the inner peripheral surface of the through hole 54 of the housing 5. This can improve sealing performance between the inner peripheral surface of the through hole 54 of the housing 5 and the outer peripheral surface 61a of the tubular elastic member 6.

In the present embodiment, as described above, the plurality of motor-side wires 3 is provided to connect the motor 1 and the inverter 2. The plurality of tubular elastic members 6 is provided corresponding to the plurality of motor-side wires 3. The housing 5 has the plurality of through holes 54 corresponding to the plurality of tubular elastic members 6 in which the plurality of motor-side wires 3 is individually inserted. In the case of a single tubular elastic member 6 having a plurality of wire insertion holes 63 corresponding to the plurality of motor-side wires 3, if the plurality of motor-side wires 3 moves due to vibration of the vehicle and the elastic member near the wire insertion hole 63 in which one of adjacent motor-side wires 3 is inserted is pulled with the movement of the one motor-side wire 3, a gap may be created between the wire insertion hole 63 in which the other wire is inserted and the other wire. This is disadvantageous in that the oil Ab leaks out of the motor chamber 51 through the gap between the wire insertion hole 63 in which the other wire is inserted and the other wire (sealing performance is reduced). Therefore, by forming, in the housing 5, the plurality of through holes 54 corresponding to the plurality of tubular elastic members 6 in which the plurality of motor-side wires 3 is individually inserted, the gap is less likely to be created between the motor-side wire 3 and the wire insertion hole 63 due to vibration of the vehicle. This can reduce a decrease in sealing performance between the wire insertion hole 63 and the motor-side wire 3.

### [Modifications]

The above embodiment disclosed herein should be construed as illustrative in all respects and not restrictive. The scope of the present invention is shown by the claims rather than by the description of the above embodiment, and includes all changes (modifications) that fall within the meaning and scope equivalent to the claims.

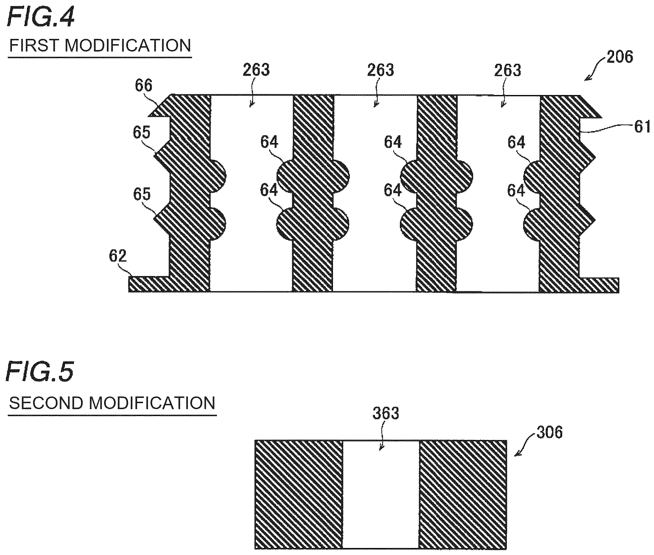

For example, the above embodiment illustrates an example in which the plurality of (three) tubular elastic members 6 is provided corresponding to the plurality of (three) motor-side wires 3. However, the present invention is not limited to this. In the present invention, as in a first modification shown in FIG. 4, a tubular elastic member 206 having a plurality of (three) wire insertion holes 263 corresponding to the plurality of (three) motor-side wires 3 may be mounted in the through hole 54.

The above embodiment illustrates an example in which the tubular elastic member 6 includes the body portion 61, the flange portion 62, the wire insertion hole 63, the inner protrusions 64, the outer protrusions 65, and the end-side protrusion 66. However, the present invention is not limited to this. In the present invention, as in a second modification shown in FIG. 5, a tubular elastic member 306 may merely have a wire insertion hole 363.

The above embodiment illustrates an example in which the housing 5 includes the motor chamber 51 and the inverter chamber 52. However, the present invention is not limited to this. In the present invention, the inverter chamber need not necessarily be provided in the housing.

The above embodiment illustrates an example in which the oil Ab for cooling the heat-generating portion of the motor 1 housed inside the motor chamber 51 is stored in the motor chamber 51. However, the present invention is not limited to this. In the present invention, water may be stored in the motor chamber.

The above embodiment illustrates an example in which the other end of the motor-side wire 3 and the other end of the inverter-side wire 4 are connected in the inverter chamber 52. However, the present invention is not limited to this. In the present invention, the other end of the motor-side wire and the other end of the inverter-side wire may be connected in the motor chamber.

The above embodiment illustrates an example in which the vehicle motor drive device 100 is an example of a drive motor unit that is mounted on a vehicle such as a battery electric vehicle. However, the present invention is not limited to this. In the present invention, the vehicle motor drive device may be a transfer motor unit that is mounted on a vehicle such as a battery electric vehicle.

### [Summary of Embodiment]

The present embodiment includes at least the following configurations.

A vehicle motor drive device (100) includes: a motor (1) configured to be used in a vehicle; an inverter (2) configured to supply electric power to the motor (1); a motor-side wire (3) one end of which is connected to the motor (1) and that connects the motor (1) and the inverter (2); a housing (5) including a motor chamber (51) that houses the motor (1) inside and that stores a coolant (Ab) for cooling the motor (1) housed in the motor chamber (51), the housing (5) having a through hole (54) through which the motor-side wire (3) extending from the motor (1) housed in the motor chamber (51) passes; and an elastically deformable tubular elastic member (6, 206, 306) having a wire insertion hole (63, 263, 363) in which the motor-side wire (3) extending from the motor (1) is inserted, the tubular elastic member (6, 206, 306) being mounted in the through hole (54) so as to seal between the through hole (54) and the motor-side wire (3).

With this configuration, oil-tightness and insulation of the motor chamber (51) can be ensured by the tubular elastic member (6) mounted in the through hole (54) of the housing (5) without providing a terminal block chamber and an insulated terminal block in the housing (5). This can simplify the device structure while ensuring the oil-tightness and insulation of the motor chamber (51).

The housing (5) further includes an inverter chamber (52) that houses the inverter (2) inside, and a partition wall (53) that separates the motor chamber (51) and the inverter chamber (52) and that has the through hole (54). The tubular elastic member (6) is mounted in the through hole (54) of the partition wall (53).

With this configuration, the oil-tightness and insulation of the motor chamber (51) can be ensured by mounting the tubular elastic member (6) in the through hole (54) formed in the partition wall (53) without providing a terminal block chamber and an insulated terminal block in the housing (5) separately from the inverter chamber (52) and the motor chamber (51). This can simplify the device structure in the vehicle motor drive device (100) that is a combined unit of the motor (1) and the inverter (2).

The vehicle motor drive device (100) further includes an inverter-side wire (4) one end of which is connected to the inverter (2) and that is disposed in the inverter chamber (52). The other end of the motor-side wire (3) and the other end of the inverter-side wire (4) are connected in the inverter chamber (52).

With this configuration, the other end of the motor-side wire (3) and the other end of the inverter-side wire (4) are connected in the inverter chamber (52) in which the oil (Ab) is not stored. Therefore, the oil (Ab) will not get on the connection portion between the other end of the motor-side wire (3) and the other end of the inverter-side wire (4). This can reduce a decrease in electrical conductive properties due to adhesion of the oil (Ab).

The tubular elastic member (6) includes a circumferential inner protrusion (64) protruding from an inner peripheral surface (63a) of the wire insertion hole (63) having a diameter (Di) smaller than a diameter of the motor-side wire (3).

With this configuration, the inner protrusion (64) contacts the motor-side wire (3). This can reduce contact between the entire inner peripheral surface (63a) of the wire insertion hole (63) and the entire outer peripheral surface of the motor-side wire (3), and therefore can reduce sliding resistance between the inner peripheral surface (63a) of the wire insertion hole (63) and the motor-side wire (3) when inserting the motor-side wire (3) into the wire insertion hole (63). This facilitates insertion of the motor-side wire (3) into the wire insertion hole (63) while ensuring sealing performance between the wire insertion hole (63) and the motor-side wire (3).

The tubular elastic member (6) includes a circumferential outer protrusion (65) protruding from a portion of an outer peripheral surface (61a) that faces an inner peripheral surface of the through hole (54) of the housing (5).

With this configuration, the outer protrusion (65) can be elastically deformed between the outer peripheral surface (61a) of the tubular elastic member (6) and the inner peripheral surface of the through hole (54) of the housing (5). This can improve sealing performance between the inner peripheral surface of the through hole (54) of the housing (5) and the outer peripheral surface (61a) of the tubular elastic member (6).

A plurality of the motor-side wires (3) is provided to connect the motor (1) and the inverter (2). A plurality of the tubular elastic members (6) is provided corresponding to the plurality of the motor-side wires (3). The housing (5) has a plurality of the through holes (54) corresponding to the plurality of the tubular elastic members (6) in which the plurality of the motor-side wires (3) is individually inserted.

In the case of a single tubular elastic member (6) having a plurality of wire insertion holes (63) corresponding to the plurality of the motor-side wires (3), if the plurality of the motor-side wires (3) moves due to vibration of the vehicle and the elastic member near the wire insertion hole (63) in which one of adjacent motor-side wires (3) is inserted is pulled with the movement of the one motor-side wire (3), a gap may be created between the wire insertion hole (63) in which the other wire is inserted and the other wire. This is disadvantageous in that the oil (Ab) leaks out of the motor chamber (51) through the gap between the wire insertion hole (63) in which the other wire is inserted and the other wire (sealing performance is reduced). Therefore, by forming, in the housing (5), the plurality of the through holes (54) corresponding to the plurality of the tubular elastic members (6) in which the plurality of the motor-side wires (3) is individually inserted, the gap is less likely to be created between the motor-side wire (3) and the wire insertion hole (63) due to vibration of the vehicle. This can reduce a decrease in sealing performance between the wire insertion hole (63) and the motor-side wire (3).

### Description of the Reference Numerals

1 motor
2 inverter
3 motor-side wire
4 inverter-side wire
5 housing
6, 206, 306 tubular elastic member
51 motor chamber
52 inverter chamber
53 partition wall
54 through hole
61a outer peripheral surface
63, 263, 363 wire insertion hole
63a inner peripheral surface
64 inner protrusion
65 outer protrusion
100 vehicle motor drive device
Ab oil (coolant)

## Claims

1. A vehicle motor drive device, comprising:
a motor configured to be used in a vehicle;
an inverter configured to supply electric power to the motor;
a motor-side wire one end of which is connected to the motor and that connects the motor and the inverter;
a housing including a motor chamber that houses the motor inside and that stores a coolant for cooling the motor housed in the motor chamber, the housing having a through hole through which the motor-side wire extending from the motor housed in the motor chamber passes; and
an elastically deformable tubular elastic member having a wire insertion hole in which the motor-side wire extending from the motor is inserted, the tubular elastic member being mounted in the through hole so as to seal between the through hole and the motor-side wire.

2. The vehicle motor drive device according to claim 1, wherein:
the housing further includes
an inverter chamber that houses the inverter inside, and
a partition wall that separates the motor chamber and the inverter chamber and that has the through hole; and
the tubular elastic member is mounted in the through hole of the partition wall.

3. The vehicle motor drive device according to claim 2, further comprising an inverter-side wire one end of which is connected to the inverter and that is disposed in the inverter chamber, wherein the other end of the motor-side wire and the other end of the inverter-side wire are connected in the inverter chamber.

4. The vehicle motor drive device according to claim 1, wherein the tubular elastic member includes a circumferential inner protrusion protruding from an inner peripheral surface of the wire insertion hole having a diameter smaller than a diameter of the motor-side wire.

5. The vehicle motor drive device according to claim 1, wherein the tubular elastic member includes a circumferential outer protrusion protruding from a portion of an outer peripheral surface that faces an inner peripheral surface of the through hole of the housing.

6. The vehicle motor drive device according to claim 1, wherein:
a plurality of the motor-side wires is provided to connect the motor and the inverter;
a plurality of the tubular elastic members is provided corresponding to the plurality of the motor-side wires; and
the housing has a plurality of the through holes corresponding to the plurality of the tubular elastic members in which the plurality of the motor-side wires is individually inserted.
